# EUROPÄISCHE PATENTSCHRIFT

(11) **EP 2 661 968 B1**
(45) Veröffentlichungstag und Bekanntmachung des Hinweises auf die Patenterteilung: **21.03.2018**
(21) Anmeldenummer: 12167628.2
(22) Anmeldetag: 11.05.2012
(51) Int. Cl.: A23C 3/03, A23C 7/04, A23C 9/142, A23C 19/05

(54) **Verfahren zur Herstellung von Käsereimilch (II)**
Process for making cheese dairy milk (II)
Procédé destiné à la fabrication de lait de fromagerie (II)

(43) Veröffentlichungstag der Anmeldung: 13.11.2013
(73) Patentinhaber: DMK Deutsches Milchkontor GmbH, 28199 Bremen (DE)
(72) Erfinder: Döring, Sven-Rainer, 27404 Zeven (DE)
(74) Vertreter: Fabry, Bernd

(56) Entgegenhaltungen:
- EP-A1- 2 368 437
- WO-A1-96/36238
- WO-A1-98/57549
- DE-A1- 10 158 009
- DE-A1-102011 015 908
- DE-C1- 10 036 085
- US-A- 4 876 100
- GEA WESTFALIA SEPARATOR: "Milchentrahmung mit Westfalia Separator hyvol proplus-Separatoren", INTERNET CITATION, 4. November 2005 (2005-11-04), Seiten 1-2, XP002595619, Gefunden im Internet: URL:http://www.westfalia-separator.com/de/ anwendungen/molkereitechnik/milch-molke/ [gefunden am 2010-05-08]
- FRITSCH J ET AL: "Development and Optimization of a Carbon Dioxide-Aided Cold Microfiltration Process for the Physical Removal of Microorganisms and Somatic Cells from Skim Milk", JOURNAL OF DAIRY SCIENCE, AMERICAN DAIRY SCIENCE ASSOCIATION, US, Bd. 91, Nr. 10, 1. Oktober 2008 (2008-10-01), Seiten 3744-3760, XP026955048, ISSN: 0022-0302 [gefunden am 2008-10-01]
- DAMEROW G: "DIE ANWENDUNG DER MIKROFILTRATION FUR KONSUMMILCH, KESSELMILCH, MOLKE*", DMZ. LEBENSMITTELINDUSTRIE UND MILCHWISSENSCHAFT, VOLKSWIRTSCHAFTLICHER VERLAG GMBH. MUNCHEN, DE, Bd. 110, Nr. 50, 14. Dezember 1989 (1989-12-14), XP000080610, ISSN: 0938-9369

## Beschreibung

### Gebiet der Erfindung

Die Erfindung befindet sich auf dem Gebiet der Lebensmitteltechnologie und betrifft ein verbessertes Verfahren zur Herstellung von so genannter Käsereimilch.

### Stand der Technik

Unter der Bezeichnung Käsereimilch wird eine Rohmilch bezeichnet, die nach Pasteurisierung und Fetteinstellung zur Herstellung von Käse, aber auch Joghurt, dickgelegt werden soll. Da die Käseherstellung früher überwiegend in Kesseln durchgeführt wurde - was heute teilweise auch noch für die Herstellung von Parmesan typisch ist - wird auch synonym von Kesselmilch gesprochen.

Damit Rohmilch für die Herstellung von Käse eingesetzt werden kann, muss sie gesetzlichen Anforderungen entsprechen, die in der Käseverordnung niedergelegt sind. Üblicherweise beginnt der Verarbeitungsprozess mit einer Erhitzung der Rohmilch durch Wärmeaustausch mit Wärmeträgermedien bei gleichzeitiger teilweiser Wärmerückgewinnung. Nach Erwärmung der Rohmilch auf etwa 55 °C findet die Separation in Magermilch, Rahm und Separatorschlamm statt. Dabei wird die Erhitzung so weit getrieben, dass eine erste Thermisierung oder Pasteurisierung stattfindet. Nach ihrer anschließenden Standardisierung wird die standardisierte Milch in einem Tank vorgestapelt und die aus dem Tank abgezogene vorgestapelte Milch durch erneute Erhitzung einer zweiten Erhitzung über etwa 15 Sekunden bei 58 °C unterzogen.

Von erheblichem Nachteil ist dabei, dass durch diese Pasteurisierung, die üblicherweise in einem Temperaturbereich von 72 bis 74 °C über einen Zeitraum von 15 bis 30 Sekunden ausgeführt wird, nur die in der Rohmilch vorhandenen vegetativen Keime, nicht aber thermoresistente Sporen und thermodure Keime abgetötet werden, die ein Wachstumsoptimum oberhalb von 45 °C haben. Während der an die Pasteurisierung anschließenden Wärmerückgewinnung durchläuft die Milch einen Temperaturbereich von etwa 45 °C, der gerade dem Wachstumsoptimum dieser verbliebenen Keime entspricht, so dass sich die in der vorbehandelten Milch verbliebenen Sporen und Keime stürmisch vermehren.

Diese Keime können bei der Käsereifung zu Fehlgärungen und Käsefehlern führen, beispielsweise Fehllochungen. Außerdem enthält die bei der Käseherstellung ablaufende Molke einen entsprechend hohen Anteil der thermoresistenten Keime. Da in den molkeverarbeitenden Prozessen keine ausreichend hohen Erhitzungstemperaturen Anwendung finden, sind die in ihr enthaltenen thermoresistenten Keime unerwünscht und können zu Spezifikationsverletzungen, insbesondere hinsichtlich der Keimzahl, in den Endprodukten führen.

Aus diesem Grund wird die so vorbehalte Milch in der Regel einem zweiten thermischen Schritt (Thermisierung) unterworfen und dann über eine Bakterofuge geleitet, um die Keimzahl so weit zu reduzieren, wie dies aus produktionstechnischen und gesetzlichen Erfordernissen notwendig ist. Es liegt auf der Hand, dass die zweifache thermische Behandlung technisch aufwendig und energieintensiv ist, was die Ökonomie des gesamten Prozesses belastet.

Das Dokument DE 100 36 085 C1 offenbart ein Verfahren zur Entkeimung von Milch, bei dem man
a) die Rohmilch wird auf 55 °C erwärmt und entrahmt,
b) die Magermilch wird dann einer Mikrofiltration unterworfen, und
c) anschließend das erhaltene Permeat und der Rahm zunächst standardisiert und dann pasteurisiert.

Aus dem Stand der Technik sind Verfahren bekannt, die versuchen, die oben genannten Nachteile abzustellen. So wird beispielsweise in der EP 2 368 437 A1 (Müller) vorgeschlagen, die Separation in einem kalten Zustand der Rohmilch und die Erhitzung nur an der standardisierten Milch vorzunehmen. So bezieht sich das Dokument auf ein Verfahren zur Herstellung von Käsereimilch aus Rohmilch, bei dem die Rohmilch in Magermilch, Rahm und Feststoffe, dem sogenannten Separatorschlamm separiert, die separierte Magermilch durch eine dosierte Zugabe von Rahm und ggf. weiteren Milchinhaltsstoffen standardisiert und die standardisierte Milch einer ihrer Pasteurisierung dienenden Erhitzung unterzogen wird. Das Verfahren zeichnet sich dadurch aus, dass die Separation der Rohmilch in einem kalten Zustand (Temperaturbereich 8-12 °C) und die Erhitzung nur an der standardisierten Milch erfolgt. Auch wenn das Verfahren energetische Vorteile aufweist, ist die Entkeimung indes unbefriedigend.

Das Dokument mit dem Titel ***"Milchentrahmung mit Westfalia Separator hyvol proplus-Separatoren"*** offenbart, dass eine Kaltentrahmung bei Temperaturen zwischen 4 und 20 °C gegenüber den üblichen Entrahmungstemperaturen von 52-55 °C einen geringeren Energieaufwand und damit sinkende Produktionskosten für einen Molkereibetrieb bedeutet.

Das Dokument mit dem Titel ***"Development and optimization of a carbon dioxide-aided cold microfiltration process for the physical removal of microorganisms and somatic cells from skim milk"*** von Fritsch *et al* offenbart die Entkeimung von Magermilch durch Anwendung einer Mikrofiltration mittels einer Membran mit einem Porendurchmesser von 1,4 µm bei einer Temperatur von 6 ± 1 °C.

Aus der US 2002 012732 A1 (Lindquist) ist ein Verfahren bekannt, bei der man eine Magermilch einer Filtration unterwirft und dabei eine Permeat und ein Retentat erhält. Während das Permeat einer Wärmebehandlung unterworfen wird, wird das Retentat ein weiteres Mal filtriert und das dabei erhaltene zweite Permeat dem ersten Permeat zugesetzt. Das Verfahren erweist sich in der Praxis jedoch als viel zu aufwendig.

Gegenstand der US 6,372,276 B1 (Lindquist) ist ein Verfahren zur Erzeugung einer sterilen Milch, bei der Rohmilch zunächst filtriert und das so erhaltene Permeat anschließend in mehreren Stufen hitzebehandelt wird. Bei dieser Verfahrensdurchführung beobachtet man jedoch ein häufiges Verstopfen der Membranen, was zu ständigen Unterbrechungen im kontinuierlichen Verfahrensablauf führt, zudem werden die Keimzahlen nicht ausreichend reduziert.

Die Aufgabe der vorliegenden Erfindung hat somit darin bestanden, eine standardisierte Käserei- bzw. Kesselmilch zur Verfügung zu stellen, die unter Einsatz eines einzigen thermischen Behandlungsschrittes von allen vegetativen Keimen und thermoresistenten Sporen befreit ist, so dass die verbliebene Keimzahl unterhalb des gesetzlich zulässigen und aus Produktionssicht akzeptablen Wertes liegt.

### Beschreibung der Erfindung

Gegenstand der Erfindung ist ein Verfahren zur Herstellung von Käsereimilch, bei dem man
(a) Rohmilch bei einer Temperatur im Bereich von 8 bis 12 °C von festen Bestandteilen befreit,
(b) das resultierende Zwischenprodukt entfettet,
(c) die so erhaltene Magermilch einer Mikrofiltration mittels einer Keramikmembran mit einem Porendurchmesser von 1,1 bis 2 µm bei einer Temperatur im Bereich von 5 bis 25 °C unterwirft,
(d) das resultierende Permeat durch Zugabe einer Menge des im Schritt (b) abgetrennten Rahms auf den gewünschten Fettgehalt einstellt, und die so erhaltene standardisierte Milch
(e) abschließend pasteurisiert.

Überraschenderweise wurde gefunden, dass eine Kombination aus Kaltmilchseparation und nachgeschalteter Mikrofiltration in Summe zu einer niedrigeren Restkeimzahl führt und das Problem der Verstopfung der Membranen löst. Dabei hat es sich als überflüssig erwiesen, Membranen mit Porendurchmessern unterhalb von 0,5 µm zu verwenden. Für die praktisch quantitative Abtrennung der Mikroorganismen, die sich in der thermischen Behandlung als resistent erwiesen haben, reicht eine Porengröße von 1,1 bis 2 µm vollständig aus. Auf diese Weise wird zugleich das Problem der Verstopfung und Durchwachsen der Poren gelöst und ein kontinuierlicher Arbeitsbetrieb sichergestellt.

Mit dem erfindungsgemäßen Verfahren ist zudem der Vorteil verbunden, dass man die Erhitzung der Rohmilch nur einmal direkt vor der Einleitung der Käsereimilch in den Käsefertiger durchführt und auf diese Weise die gesetzlich vorgeschriebene Pasteurisierung bewirkt. Für die so erhaltene standardisierte Milch erübrigt sich die Behandlung in einer Bactofuge.

### Kaltmilchseparation

Im erfindungsgemäßen Verfahren ist vorgesehen, dass die Temperatur des kalten Zustandes der Rohmilch durch Wärmeaustausch mit einem Wärmeträgermedium auf einen für ihre Separation optimalen Wert eingestellt wird. Normalerweise steht die Rohmilch in einem gekühlten Zustand zur Verfügung, dessen Temperatur nicht dem Wert entspricht, bei dem ihre Kaltseparation am wirkungsvollsten und für das Milchfett (Rahm) am schonendsten betrieben werden kann. Deshalb wird sie durch den Wärmeaustausch auf den für ihre Separation optimalen Wert eingestellt. Die dabei anfallende Austauschkälte kann insbesondere durch eine sogenannte Wärmeschaukel anderen Prozessen, die innerhalb eines Molkereibetriebs ablaufen, zur Verfügung gestellt werden. Beispielsweise ist die Temperatur der gekühlten Rohmilch nicht höher als 6 °C, während die für die Kaltseparation optimale Temperatur im Bereich von 8 bis 12 °C liegt. In diesem Fall erfolgt der Wärmeaustausch durch Anwärmen der Rohmilch, damit die Temperatur ihres kalten Zustandes auf einen in diesem Bereich liegenden Wert angehoben wird. Normalerweise liegt in Molkereibetrieben ein Wärmeüberschuss vor. Deshalb kann als Wärmeträgermedium für das Anwärmen Niedrigtemperaturwasser, das in Prozessen des Molkereibetriebes anfällt, verwendet werden. Dieses Niedrigtemperaturwasser wird dem Wärmeaustauschprozess mit einer Temperatur, die beispielsweise im Bereich von 35 °C liegt, zugeführt und kühlt sich durch den Wärmeaustausch auf eine Temperatur, die beispielsweise im Bereich von 11 bis 15 °C liegt, ab. Dadurch stellt das erfindungsgemäße Verfahren eine wichtige Kältequelle für Prozesse des Molkereibetriebs zur Verfügung.

Die Abtrennung von Feststoffen ("Käsestaub") sowie die Entrahmung des Fettanteils von etwa 4 Ges.-% erfolgt üblicherweise in einem nachgeschalteten Bauteil, vorzugsweise einem Separator. Derartige Bauteile sind aus dem Stand der Technik hinreichend bekannt. In der Milchindustrie sehr verbreitet sind Separatoren der Firma GEA Westfalia Separator GmbH, mit denen die beiden Schritte einzeln oder gemeinsam durchgeführt werden können (http://www.westfalia-separator.com/de/anwendungen/molkereitechnik/milch-molke.html). Bevorzuhte Kaltmilchseparatoren werden von diesem Hersteller unter der Bezeichnung "Procool" angeboten. Entsprechende Bauteile sind beispielsweise auch in der DE 10036085C1 und der DE10361526 B3(Westfalia) beschrieben und dem Fachmann bestens bekannt, so dass es zur Durchführung dieser Verfahrensschritte keiner Erläuterungen bedarf, da sie den allgemeinen Fachwissen zuzurechnen sind.

### Mikrofiltration

Die Mikrofiltration ist ein Verfahren zur Stoffabtrennung. Der wesentliche Unterschied zwischen der Mikro- und der Ultrafiltration liegt in den verschiedenen Porengrößen und in der unterschiedlichen Membranstruktur wie den Werkstoffen und den beteiligten Filtermaterialien. Eine Filtration durch Membranen mit einer Porengröße < 0,1 µm wird in der Regel Ultrafiltration genannt, während die Filtration bei Porengrößen > 0,1 µm gewöhnlich als Mikrofiltration bezeichnet wird. In beiden Fällen handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt. Der Werkstoff der Filterfläche kann je Einsatzgebiet aus Edelstahl, Kunststoff, Keramik oder textilen Gewebe bestehen. Es gibt verschiedene Erscheinungsformen der Filterelemente: Kerzenfilter, Flachmembranen, Spiralwickelmodule, Taschenfilter und Hohlfasermodule, die im Sinne der vorliegenden Erfindung alle grundsätzlich geeignet sind.

In der Milchtechnik hat bislang das Vorurteil geherrscht, zur Abtrennung von Mikroorganismen und fettbestandteilen in der Rohmilch dürfe der Porendurchmesser einen Wert von 0,5 µm nicht unterschreiten. Die Erfindung schließt jedoch die Erkenntnis ein, dass zur Herstellung einer Rohmilch der Güteklasse I ein Durchmesser im Bereich von 1,1 bis sogar 2 µm und vorzugsweise 1,3 bis 1,5 µm völlig ausreichend ist, wenn zuvor die Mehrzahl der thermolabilen Keime durch eine entsprechende thermische Behandlung abgetrennt und mit dem Separatorschlamm ausgeschleust worden ist. In Kombination dieses im Vergleich größeren Porendurchmessers mit einer Mikrofiltrationseinrichtung, die aus einer Keramikmembran besteht, wird gleichzeitig das Problem der häufigen Verstopfung gelöst.

### Standardisierung

Der für die Standardisierung der aus der Rohmilch separierten Magermilch zuzugebende Rahm kann aus dem aus ihr abgetrennten Rahm entnommen werden. Zusätzlich oder alternativ kann der zuzugebende Rahm aber auch aus anderen Prozessen, insbesondere aus einem Molkeverarbeitungsprozess, in dem Molkenrahm anfällt, entnommen werden. Weiterhin kann bei der Standardisierung durch eine dosierte Zugabe von Eiweiß, das beispielsweise einem anderen Milchverarbeitungsprozess entnommen wird, auch der Eiweißgehalt standardisiert werden.

Eine wichtige Weiterbildung des erfindungsgemäßen Verfahrens besteht darin, dass aus der standardisierten Milch ein Keimkonzentrat abgetrennt wird. Hierdurch wird der Anteil qualitätsgefährdender Keime in der Käsereimilch weiterhin reduziert.

Im Rahmen der Erfindung ist ferner vorgesehen, dass die standardisierte Milch vor ihrer Pasteurisierung vorgestapelt wird. Durch die Vorstapelung in einem Vorstapeltank kann, sofern es erforderlich ist, eine Verweilzeit generiert werden, falls der zu produzierende Käse dieses erforderlich macht. Die eigentliche Pasteurisierung erfolgt vorzugsweise in (Platten-)Wärmeaustauschern, an denen ein Temperaturgradient anliegt, der so gewählt ist, dass die standardisierte Milch für eine Verweilzeit von mindestens 20 und höchstens 60 Sekunden, vorzugsweise etwa 30 Sekunden auf eine Temperatur von etwa 70 bis 80 °C und insbesondere etwa 72 bis 74 °C erhitzt wird.

Der besondere Vorteil des Verfahrens liegt wie beschrieben darin, dass eine weitere thermische Behandlung und Keimabtrennung in einer Bakterofuge nicht mehr erforderlich ist. Da die Mikrofiltration energetisch wesentlich günstiger durchgeführt werden kann als eine Abtrennung in einer Bacterofuge, liegt der ökonomische Vorteil des erfindungsgemäßen Verfahrens auf der Hand.

### Ablauf des Verfahrens

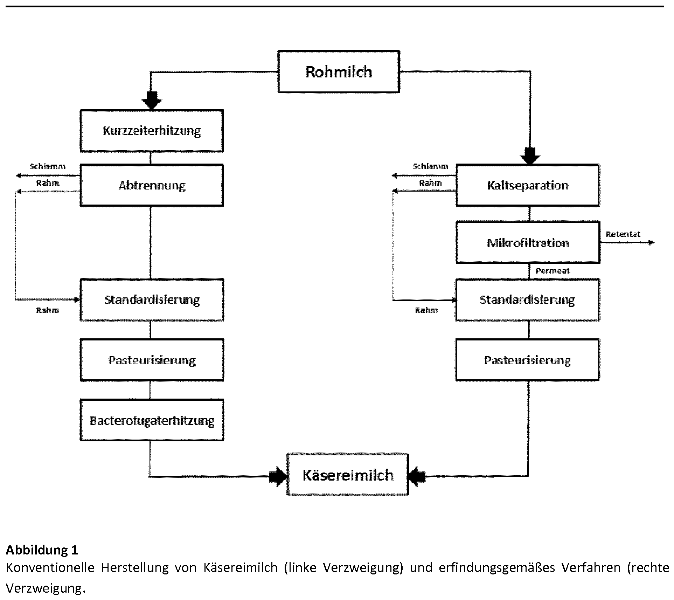

Die Erfindung wird im Folgenden durch die Abbildung 1 weiter erläutert, in dem der Verfahrensablauf als Fließschema wiedergegeben ist.

Im linken Ast des Schemas ist die konventionelle Herstellung von Käsereimilch dargestellt. Dabei wird die Rohmilch zunächst einer Kurzzeiterhitzung unterworfen und dann im erwärmten Zustand in einem Separator vom Schlamm befreit. Gleichzeitig findet eine Entrahmung statt. Die resultierende Magermilch wird nun mit einer Menge Rahm auf einen definierten Fettgehalt eingestellt ("standardisiert") und anschließend pasteurisiert, d.h. für etwa 30 Sekunden auf 72 bis 74 °C erhitzt. Um die während den beiden Erhitzungsschritten nicht inaktivierten abzutrennen, folgt schließlich eine weitere mechanische Abtrennung in einer Bactofuge. Das Keimkonzentrat wird abgetrennt und die pasteurisierte Milch zur weiteren Verarbeitung beispielsweise in einen Käsefertiger gegeben.

Im rechten Ast der Abbildung ist das erfindungsgemäße Verfahren wiedergegeben. Die Rohmilch wird ohne weitere Erhitzung einer kalten Separation bei etwa 10 °C unterworfen und dabei Schlamm und Rahm abgetrennt. An die Separation schließt sich die Mikrofiltration an, bei nicht nur vegetative Keime, sondern auch Sporen im Retentat zurückgehalten werden, während das Permeat weiterverarbeitet wird. Ein Teil des Rahms wird anschließend wieder zur Einstellung eines definierten Fettgehaltes dem Permeat zurückgegeben. Es schließt sich die Pasteurisierung an, eine Weiterbehandlung in einer Bacterofuge ist indes nicht mehr erforderlich, d.h. die standardisierte Käsereimilch kann direkt in den Käsefertiger geleitet werden.

## Patentansprüche

1. Verfahren zur Herstellung von Käsereimilch, bei dem man
(a) Rohmilch bei einer Temperatur im Bereich von 8 bis 12 °C von festen Bestandteilen befreit,
(b) das resultierende Zwischenprodukt entfettet,
(c) die so erhaltene Magermilch einer Mikrofiltration mittels einer Keramikmembran mit einem Porendurchmesser von 1,1 bis 2 µm bei einer Temperatur im Bereich von 5 bis 25 °C unterwirft,
(d) das resultierende Permeat durch Zugabe einer Menge des im Schritt (b) abgetrennten Rahms auf den gewünschten Fettgehalt einstellt, und die so erhaltene standardisierte Milch
(e) abschließend pasteurisiert.

2. Verfahren nach Anspruch 1, **dadurch gekennzeichnet, dass** man die Erhitzung der Rohmilch nur einmal direkt vor der Einleitung der Käsereimilch in den Käsefertiger durchführt und auf diese Weise die gesetzlich vorgeschriebene Pasteurisierung bewirkt.

3. Verfahren nach den Ansprüchen 1 und/oder 2, **dadurch gekennzeichnet, dass** man die so erhaltene standardisierte Milch keiner Behandlung in einer Bactofuge unterwirft.

4. Verfahren nach mindestens einem der Ansprüche 1 bis 3, **dadurch gekennzeichnet, dass** man die festen Bestandteile in einem Separator abtrennt.

5. Verfahren nach einem der Ansprüche 1 bis 4, **dadurch gekennzeichnet, dass** die Mikrofiltration mittels einer Membran durchführt, die einen Porendurchmesser von 1,3 bis 1,5 µm aufweist.

6. Verfahren nach einem der Ansprüche 1 bis 5, **dadurch gekennzeichnet, dass** man bei der Standardisierung den zugegebenen Rahm aus dem separierten Rahm entnimmt.

7. Verfahren nach einem der Ansprüche 1 bis 5, **dadurch gekennzeichnet, dass** man bei der Standardisierung den zugegebenen Rahm aus in einem Molkeverarbeitungsprozess anfallenden Molkenrahm entnimmt.

8. Verfahren nach einem der Ansprüche 1 bis 7, **dadurch gekennzeichnet, dass** man bei der Standardisierung eine dosierte Zugabe von in einem Milchverarbeitungsprozess anfallenden Eiweiß vornimmt.

9. Verfahren nach einem der Ansprüche 1 bis 8, **dadurch gekennzeichnet, dass** man aus der pasteurisierten standardisierten Milch ein Keimkonzentrat abtrennt.

10. Verfahren nach Anspruch 9, **dadurch gekennzeichnet, dass** man die Abtrennung durch Zentrifugieren vornimmt.

11. Verfahren nach einem der Ansprüche 1 bis 10, **dadurch gekennzeichnet, dass** man die standardisierte Milch vor ihrer Pasteurisierung stapelt.

12. Verfahren nach einem der Ansprüche 1 bis 11, **dadurch gekennzeichnet, dass** man die standardisierte Milch bei Temperaturen im Bereich von 70 bis 80°C und über eine Dauer von 20 bis 60 Sekunden pasteurisiert.

## Claims

1. A process for the production of cheese milk, comprising the steps of
(a) removing solids from raw milk at a temperature in the range from 8 to 12 °C,
(b) skimming the resulting intermediate,
(c) subjecting the thus-obtained skimmed milk to microfiltration at a temperature in the range of from 5 to 25 °C, wherein the microfiltration is carried out by a ceramic membrane having a pore diameter of from 1.1 to 2 µm,
(d) adjusting the resulting permeate to yield the desired fat content by adding an amount of cream that was separated in step (b),
(e) pasteurizing the thus-obtained standardized milk in a final step.

2. The process according to claim 1, wherein heating of the raw milk is performed only once, directly before passing the cheese milk into the cheese vat, thus effecting the legally required pasteurization.

3. Process according to claims 1 and/or 2, wherein standardized milk such obtained is not subjected to treatment in a bactofuge.

4. Process according to at least one of claims 1 to 3, wherein the solids are separated in a separator.

5. Process according to one of claims 1 to 4, wherein the microfiltration is carried out by a membrane having a pore diameter of from 1.3 to 1.5 µm.

6. Process according to one of claims 1 to 5, wherein during standardization the added cream is taken from the separated cream.

7. Process according to one of claims 1 to 5, wherein during standardization the added cream is taken from whey cream received in a whey process.

8. Process according to one of claims 1 to 7, wherein during standardization a metered quantity of protein obtained in a dairy process is added.

9. Process according to one of claims 1 to 8, wherein a bacteria concentrate is separated from the pasteurized standardized milk.

10. The process according to claim 9, wherein the separation is performed by centrifugation.

11. Process according to one of claims 1 to 10, wherein the standardized milk is stored before it is pasteurized.

12. Process according to one of claims 1 to 11, wherein the standardized milk is pasteurized at temperatures within the range of from 70 to 80 °C and for a period of from 20 to 80 seconds.

## Revendications

1. Procédé de fabrication de lait de fromagerie, selon lequel
(a) du lait brut est débarrassé des constituants solides à une température dans la plage allant de 8 à 12 °C,
(b) le produit intermédiaire résultant est dégraissé,
(c) le lait maigre ainsi obtenu est soumis à une microfiltration au moyen d'une membrane céramique ayant un diamètre de pores de 1,1 à 2 µm à une température dans la plage allant de 5 à 25 °C,
(d) le perméat résultant est ajusté à la teneur en matières grasses souhaitées par ajout d'une quantité de la crème séparée à l'étape (b), puis le lait normalisé ainsi obtenu
(e) est pasteurisé.

2. Procédé selon la revendication 1, **caractérisé en ce que** le chauffage du lait brut n'est réalisé qu'une fois directement avant l'introduction du lait de fromagerie dans la machine pour la fabrication du fromage, et la pasteurisation légalement prescrite est ainsi réalisée.

3. Procédé selon les revendications 1 et/ou 2, **caractérisé en ce que** le lait normalisé ainsi obtenu n'est soumis à aucun traitement dans une unité bactofuge.

4. Procédé selon au moins l'une quelconque des revendications 1 à 3, **caractérisé en ce que** les constituants solides sont séparés dans un séparateur.

5. Procédé selon l'une quelconque des revendications 1 à 4, **caractérisé en ce que** la microfiltration est réalisée au moyen d'une membrane qui présente un diamètre de pores de 1,3 à 1,5 µm.

6. Procédé selon l'une quelconque des revendications 1 à 5, **caractérisé en ce que** la crème ajoutée lors de la normalisation est extraite de la crème séparée.

7. Procédé selon l'une quelconque des revendications 1 à 5, **caractérisé en ce que** la crème ajoutée lors de la normalisation est extraite d'une crème de sérum formée lors d'un procédé de traitement de lactosérum.

8. Procédé selon l'une quelconque des revendications 1 à 7, **caractérisé en ce qu'**un ajout dosé de blanc d'oeuf formé dans un procédé de traitement de lait est réalisé lors de la normalisation.

9. Procédé selon l'une quelconque des revendications 1 à 8, **caractérisé en ce qu'**un concentré de germe est séparé du lait normalisé pasteurisé.

10. Procédé selon la revendication 9, **caractérisé en ce que** la séparation est réalisée par centrifugation.

11. Procédé selon l'une quelconque des revendications 1 à 10, **caractérisé en ce que** le lait normalisé est empilé avant sa pasteurisation.

12. Procédé selon l'une quelconque des revendications 1 à 11, **caractérisé en ce que** le lait normalisé est pasteurisé à des températures dans la plage allant de 70 à 80 °C et pendant une durée de 20 à 60 secondes.
